Europäisches Patentamt

European Patent Office

Office européen des brevets

(19)

(11) Publication number: **0 284 776 B1**

(12)

# EUROPEAN PATENT SPECIFICATION

(45) Date of publication of patent specification: **05.08.92**　(51) Int. Cl.⁵: **F16K 31/06**

(21) Application number: **88102755.1**

(22) Date of filing: **24.02.88**

---

(54) **Electromagnetic valve assembly.**

---

(30) Priority: **21.03.87 JP 67422/87**

(43) Date of publication of application:
**05.10.88 Bulletin 88/40**

(45) Publication of the grant of the patent:
**05.08.92 Bulletin 92/32**

(84) Designated Contracting States:
**DE FR GB**

(56) References cited:
**EP-A- 0 242 696**
**DE-A- 1 650 574**
**DE-A- 2 134 067**
**DE-A- 2 161 605**
**GB-A- 2 033 059**

(73) Proprietor: **AISIN SEIKI KABUSHIKI KAISHA**
**1, Asahi-machi 2-Chome**
**Kariya City Aichi Pref.(JP)**

(72) Inventor: **Suzuki, Shigemitsu**
**82-1, Takahira Yoshihama-cho**
**Takahama city Aichi pref.(JP)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Winter-Roth**
**Bavariaring 4**
**W-8000 München 2(DE)**

EP 0 284 776 B1

## Description

### FIELD OF THE INVENTION

This invention relates to an electromagnetic valve assembly.

### BACKGROUND OF THE INVENTION

DE-A-2 134 067 describes a magnectic valve comprising the structural features of the generic part of the main claim.

In the case of this valve assembly a non-magnetic intermediate means is used, whereby an adherence of the valve member to the valve seat is excluded. Nevertheless, magnetic forces act against the opening movement since due to longer operation the valve seat as well as the valve member are magnetized.

Fluid exits are provided in the form of thin channels in the valve housing surrounding the fluid intake. With this structure impurities contained in the fluid may block the exits.

### Summary of the Invention

It is the object underlying the subject matter of the application to produce an electromagnetic valve assembly, the response of which is further improved when opening under fluid pressure. Furthermore, it is an object of the present invention to provide an improved electromagnetic valve assembly wherein impurities contained in the fluid will not block the exits, the valve assembly being of a self-cleaning type.

According to the application the object is solved by the characterizing features of the new main claim; in that the valve member has a hollow part and the fluid is drained off from the grooves through the inside of the valve member, the magnetizable mass of the valve member and thus the magnetic cohesion is reduced, wherein the rear stop for the movement of the valve member is transferred to the outer diameter of the valve member, and the fluid flows off through the inner diameter of the valve member. By the moving action of the valve body impurities contained in the fluid will be prevented to plug the exit grooves.

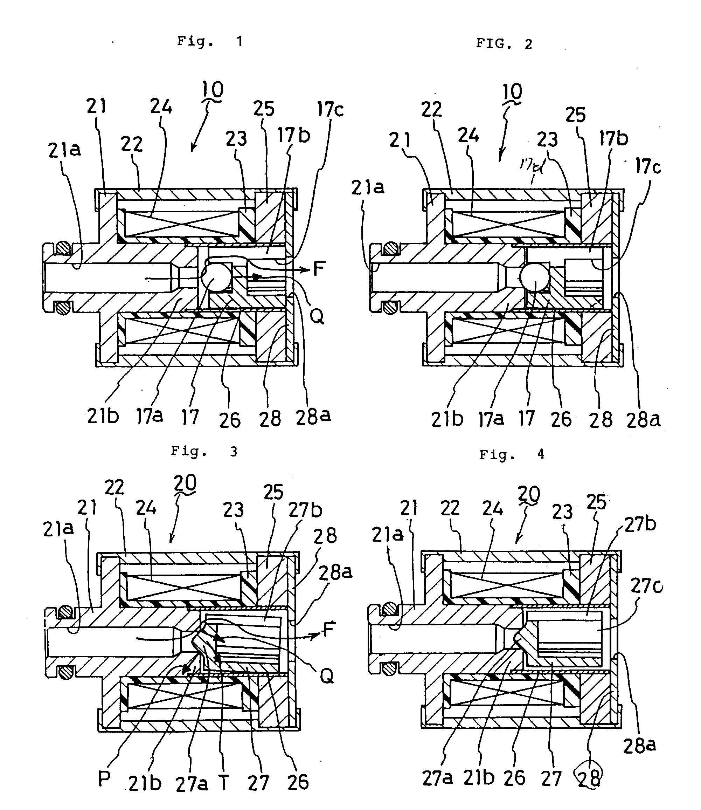

An electromagnetic valve assembly according to an internal state of the art is shown in Fig. 3 and Fig. 4.

This electromagnetic valve assembly (20) has a non-magnetic sleeve (26), a bobbin (23), a fixed core (21) including an input port (21a), a valve seat (21b), a magnetic movable valve member (27) including a cone part (27a), a cylindrical casing (22), a yoke (25), a plate (28) including an output port (28a) and an electromagnetic coil (24). The non-magnetic sleeve (26) has a fluid passage. The bobbin (23) is made of synthetic resin. The magnetic movable valve member (27) is contacted with or separated from the valve seat (21b) interposed in the fluid passage. The fixed core (21) establishes a magnetic circuit with the sleeve (26) and the yoke (25). The electromagnetic coil (24) is wound around the bobbin (23) and generates the electromagnetic force in the magnetic circuit.

Accordingly, the movable valve member (27) is attracted to the fixed core (21) and has a contact with the valve seat (21a). Consequently, flowing fluid is cut off between the input port (21a) of the fixed core (21) and the output port (28a) of the plate (28). Contrary, when the electromagnetic coil is de-energized, the movable valve member (27) is separated from the valve seat (21a) by the fluid pressure applied to the input port (21a). Consequently, fluid flows between the input port (21a) of the fixed core (21) and the output port (28a) of the plate (28). Further, a groove (27b) is formed on the outer surface of the movable valve member (27) in order to connect both ends of the movable valve member (27) with each other.

However, in the conventional valve assembly, the valve seat (21b) is formed on the fixed core (21) and the magnetic movable valve member (27) has a contact with the valve seat (21b) directly. Therefore, even if the electromagnetic coil is de-energized, the cone part (27a) of the movable valve member (27) should be attracted continuously to the valve seat (21b) of the fixed core (21) by the residual magnetism.

The affection related to the residual magnetism is further analysed hereinafter.

The valve seat (21b) and the cone part (27a) are disposed coaxially each other. However, it is very hard to arrange the cone part (27a) coaxially to the valve seat (21b) perfectly because of the manufacturing error of the dimension. Accordingly, the cone part (27a) is tightly contacted with the valve port (21b) at some part thereof, but is separated from the valve port (21b) at some part thereof. Further, the movable valve member (27) is attracted to the fixed core (21) by the residual magnetism at the contacted part between the movable valve member (27) and the fixed core (21), but is not attracted so much at the separated part. Furthermore, the fluid supplied to the input port (21a) does not flow through the contacted part but flows through the separated part.

As a result, the fluid flows the separated part between the movable valve member (27) and the fixed core (21) where the attracting force by the residual magnetism is weakened. For example, the fluid flows along the arrow (F) in the Fig. 3. Therefore, the cone part (27a) is affected of the flowing fluid, and one part of the cone part (27a) is forced by attracting force shown as arrow (P). Further, the other part of the cone part (27a) is forced by separating force shown as arrow (Q). Thus the valve member (27) is totally forced by rotating force (T). For example, as shown in Fig. 3, the valve member (27) is forced by clockwise rotating force (T). Accordingly, the axis of the valve member (27) tends to be inclined against the axis of the sleeve (26).

Thus, the phenomenon that the valve member (27) is caught by the sleeve (26), what is called "valve sticking", will happen. Accordingly, there is a problem in the conventional valve assembly that the stuck valve member (27) can not be moved under low fluid pressure, and thus, the valve member cannot be opened.

BRIEF DESCRIPTION OF THE DRAWINGS

Fig. 1 shows a cross sectional view showing an opened state of an electromagnetic valve assembly according to a preferred embodiment of the present invention.

Fig. 2 shows a cross sectional view showing a closed state of the electromagnetic valve assembly according to the preferred embodiment of the present invention.

Fig. 3 shows a cross sectional view showing the opened state of the electromagnetic valve according to internal state of the art.

Fig. 4 shows the cross sectional view showing the closed state of the electromagnetic valve according to internal state of the art.

DESCRIPTION OF THE PREFERRED EMBODIMENT

As shown in Figs. 1 and 2, an electromagnetic valve assembly (10) has a fixed core (21) and a sleeve (26) fixed to the core (21). The fixed core (21) includes an input port (21a). The sleeve (26) is provided with a flowing passage of the fluid. A bobbin (23) is made of synthetic resin and is disposed around the fixed core (21). An electromagnetic coil (24) is wound around the bobbin (23). A ferromagnetic movable valve member (17) is disposed within the sleeve (26). A plate (28) is disposed on one end of the valve member (17).

Further, a ferromagnetic yoke (25) is interposed between the bobbin (23) and the plate (28), and a cylindrical casing (22) is interposed between the yoke (25) and the fixed core (21). The cylindrical casing (22) is made of ferromagnetic substance. The magnetic circuit is formed by the plate (28), the yoke (25), the casing (22) and the fixed core (21).

A non-magnetic intermediate means (17a) is inserted into a hollow part (17d) of the movable valve member (17). This intermediate means (17a) is tightly contacted with the valve seat (21b) of the fixed core (21) under the closed state of the valve assembly (10) as shown in Fig. 2. The cylindrical part (17c) of the movable valve member (17) communicates with a plurality of grooves (17b) that are formed on the outer surface of the movable member (17).

The operation of the electromagnetic valve (10) is explained.

When the electromagnetic coil (24) is energized, the movable valve member (17) is attracted to the valve seat (21b) of the fixed core (21). This operation is shown in Fig. 2. Then, the valve seat (21b) is sealed by the intermediate means (17a) and the flowing fluid is cut off.

Contrary, when the electromagnetic coil (24) is de-energized, the intermediate means (17a) is forced by the fluid pressure applied to the input port (21a), and the intermediate means (17a) is moved toward the plate (28). This operation is shown in Fig. 1. At this time, the fluid flows the grooves (17b) along the arrow (F).

At the time when the intermediate means (17a) is moved toward the plate (28), the intermediate means (17a) is free from the affection of the residual magnetism because the intermediate means (17a) is made of non-magnetic substance. Accordingly, the fluid pressure is affected straight to the movable valve member (17), and thus, the movable valve member (17) is forced by the coaxial force with respect to the fixed core (21). Therefore, the movable valve member (17) is moved smoothly along the sleeve (26) as arrow (Q). Consequently, the valve stick will not happen.

**Claims**

1. An electromagnetic valve assembly comprising a movable valve member (17) including a cylindrical part (17c), a valve seat (21b), attracting means for attracting said movable valve member (17) towards said valve seat (21b), a non-magnetic intermediate means (17a) interposed between the front end of said movable valve member (17) and said valve seat (21b), **characterized by** said cylindrical part (17c) of the movable valve member (17) being provided with a plurality of exit grooves (17b) formed on the outer surface of said movable valve member (17) and by a hollow part being provided in said cylindrical part (17c) which is open to the rear end of said cylindrical part (17c) and is in flow connection with said grooves (17b).

2. An electromagnetic valve assembly according to claim 1, **characterized in that** said attracting means further comprises
an electromagnetic coil (24);
a fixed core (21) magnetically connected to one pole of said electromagnetic coil (24);
a yoke (25) magnetically connected to the other pole of said electromagnetic coil (24);
a casing (22) magnetically connected to said fixed core (21) and said yoke (25);
whereby a magnetic circuit is formed around said movable valve member (17).

3. An electromagnetic valve assembly according to claim 1, **characterized in that** said non-magnetic intermediate means (17a) further comprises a sealing surface selectively sealing said valve seat (21b).

4. An electromagnetic valve assembly according to claim 1, **characterized in that** said non-magnetic intermediate means (17a) is a ball member.

5. An electromagnetic valve assembly according to claim 1, **characterized in that** said non-magnetic intermediate means (17a) is a spherical member.

**Revendications**

1. Ensemble à soupape électromagnétique, comprenant un élément de clapet mobile (17) comportant une partie cylindrique (17c), un siège de soupape (21b), un moyen d'attraction afin d'attirer ledit élément de clapet mobile (17) vers ledit siège de soupape (21b), un moyen intermédiaire amagnétique (17a) interposé entre l'extrémité avant dudit élément de clapet mobile (17) et ledit siège de soupape (21b), caractérisé en ce que :
   - ladite partie cylindrique (17c) de l'élément de clapet mobile (17) comporte une multitude de rainures de sortie (17b) qui sont formées sur la surface extérieure dudit élément de clapet mobile (17) et en ce que :
   - une partie creuse est ménagée dans ladite partie cylindrique (17c) qui débouche dans l'extrémité arrière de ladite partie cylindrique (17c) et est en communication fluidique avec lesdites rainures (17b).

2. Ensemble à soupape électromagnétique selon la revendication 1, caractérisé en ce que ledit moyen d'attraction comprend en outre :
   - une bobine électromagnétique (24);
   - un noyau fixe (21) relié magnétiquement à un pôle de ladite bobine électromagnétique (24);
   - une culasse (25) reliée magnétiquement à l'autre pôle de ladite bobine électromagnétique (24);
   - une enveloppe (22) reliée magnétiquement audit noyau fixe (21) et à ladite culasse (25);

d'où il résulte qu'un circuit magnétique est formé autour dudit élément de clapet mobile (17).

3. Ensemble à soupape électromagnétique selon la revendication 1, caractérisé en ce que ledit moyen intermédiaire amagnétique (17a) comprend en outre une surface d'étanchéité rendant sélectivement étanche ledit siège de soupape (21b).

4. Ensemble à soupape électromagnétique selon la revendication 1, caractérisé en ce que ledit moyen intermédiaire amagnétique (17a) est un élément de bille.

5. Ensemble à soupape électromagnétique selon la revendication 1, caractérisé en ce que ledit moyen intermédiaire amagnétique (17a) est un élément sphérique.

**Patentansprüche**

1. Eine elektromagnetische Ventilanordnung, die ein bewegbares Ventilglied (17) mit einem Zylinderteil (17c), einen Ventilsitz (21b), Anziehmittel zum Anziehen des besagten bewegbaren Ventilgliedes (17) zu dem genannten Ventilsitz (21b) hin und ein unmagnetisches, zwischen die Stirnseite des besagten bewegbaren Ventilgliedes (17) sowie den genannten Ventilsitz (21b) eingesetztes Zwischenelement (17a) umfaßt,
dadurch gekennzeichnet,
   - daß das erwähnte Zylinderteil (17c) des bewegbaren Ventilgliedes (17) mit einer Mehrzahl von an der Außenoberfläche des besagten bewegbaren Ventilgliedes (17) ausgebildeten Auslaßkehlen (17b) versehen ist und
   - daß in dem erwähnten Zylinderteil (17c) ein Höhlungsteil vorhanden ist, das zum rückwärtigen Ende des erwähnten Zylinderteils (17c) offen ist und mit den genannten Kehlen (17b) in Strömungsverbindung steht.

2. Eine elektromagnetische Ventilanordnung nach Anspruch 1, dadurch gekennzeichnet, daß die genannten Anziehmittel ferner umfassen:
   - eine elektromagnetische Spule (24),

- einen festen Kern (21), der magnetisch an den einen Pol der besagten elektromagnetischen Spule (24) angeschlossen ist;
- ein Joch (25), das magnetisch an den anderen Pol der besagten elektromagnetischen Spule (24) angeschlossen ist;
- ein Gehäuse (22), das magnetisch mit dem genannten festen Kern (21) sowie dem erwähnten Joch (25) verbunden ist;
- wodurch rund um das besagte bewegbare Ventilglied (27) ein magnetischer Kreis gebildet wird.

3. Eine elektromagnetische Ventilanordnung nach Anspruch 1, dadurch gekennzeichnet, daß das erwähnte Zwischenelement (17a) ferner eine Dichtungsfläche umfaßt, die in ausgewählter Weise den besagten Ventilsitz (21b) verschließt.

4. Eine elektromagnetische Ventilanordnung nach Anspruch 1, dadurch gekennzeichnet, daß das erwähnte unmagnetische Zwischenelement (17a) ein Kugelelement ist.

5. Eine elektromagnetische Ventilanordnung nach Anspruch 1, dadurch gekennzeichnet, daß das erwähnte unmagnetische Zwischenelement (17a) ein sphärisches Element ist.

Fig. 1

FIG. 2

Fig. 3

Fig. 4